(19) Europäisches Patentamt
European Patent Office
Office européen des brevets

(11) **EP 3 121 159 A1**

(12) **EUROPEAN PATENT APPLICATION**
published in accordance with Art. 153(4) EPC

(43) Date of publication:
**25.01.2017 Bulletin 2017/04**

(51) Int Cl.:
**C05G 1/00** *(2006.01)*

(21) Application number: **15764734.8**

(22) Date of filing: **13.03.2015**

(86) International application number:
**PCT/BR2015/000027**

(87) International publication number:
**WO 2015/139103 (24.09.2015 Gazette 2015/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **18.03.2014 BR 1406430**

(71) Applicant: **Upl Do Brasil Indústria E Comércio De
Insumos
Agropecuários S.A.
CEP 13092-807 Campinas, SP (BR)**

(72) Inventors:
• **NEVES ARAÚJO PESSANHA, Marcelo Amaral
CEP 13092-807 Campinas, SP (BR)**
• **FABRI, Carlos Eduardo
CEP 13092-807 Campinas, SP (BR)**
• **GIUMARAES ARRUDA, Diego
CEP 13092-807 Campinas, SP (BR)**

(74) Representative: **Schmid, Nils T.F.
Boehmert & Boehmert
Anwaltspartnerschaft mbB
Patentanwälte Rechtsanwälte
Pettenkoferstrasse 20-22
80336 München (DE)**

(54) **PLANT ACTIVATOR FOR SUGAR CANE AND USE THEREOF**

(57)   The present invention relates to a plant activator for sugar cane crops and the use thereof. The activator is based on a balanced combination of nutrients, required to alter the proportion of enzymes responsible for the accumulation of sugars in the plant, the activator comprising the following nutrients: nitrogen, potassium, magnesium, sulfur, boron, copper, manganese, molybdenum and zinc. The use of the activator comprises three distinct steps: identifying the ideal moment for introducing the nutrients into the system, introducing the nutrients into the system and action of the nutrients in the plant.

EP 3 121 159 A1

**Description**

**FIELD OF INVENTION**

This invention is related to a Biocatalyst and its use in the process concerning production, transportation and accumulation of sucrose in the sugar cane crop.

**BASICS OF THE INVENTION**

The sugar cane crop was set up in Brazil since the colonial period and it became one of the main crops in the Brazilian economy.

As the largest sugar cane producer in the world, Brazil is also the first one in ethanol and sugar production. This allows Brazil to capture even more the international market due to the biofuel employed as an alternative energy.

The agricultural production and the amount of sugars (TRS - total recoverable sugar) are responsible for the economic viability of a sugar cane crop (ton of sugar cane/ha) that is presented by certain variety in its harvest.

Nowadays, varieties with low fiber content and high sucrose content are known and they can provide excellent agricultural and industrial productivity. However, sometimes it is not possible to cultivate ideal varieties in different production environment. It is necessary to reconcile the beginning of the harvest (precocity and maturation) with the time of harvest and industrialization in order to meet the demand of Pol (% of sucrose) required for an economically ideal production.

Since the first months of growth and development of sugar cane, the storage of sugar occurs gradually in fully developed nodes of aculm base. The maximum accumulation of sucrose only occurs when the plant faces restrictive conditions regarding its growth, and the total sugar accumulation process is commonly described as ripening.

Maturation of the sugar cane is a physiological process that basically involves three processes: (i) synthesis of sugars in leaves (photosynthesis), (ii) translocation or transport of the photo-assimilated products and (iii) storage of sucrose in the culms.

Maturation, as a biological process, is complex and highly dynamic and it is subject to changes due to weather conditions. Interruption in rainfall and fall in average temperature are crucial conditions to begin it.

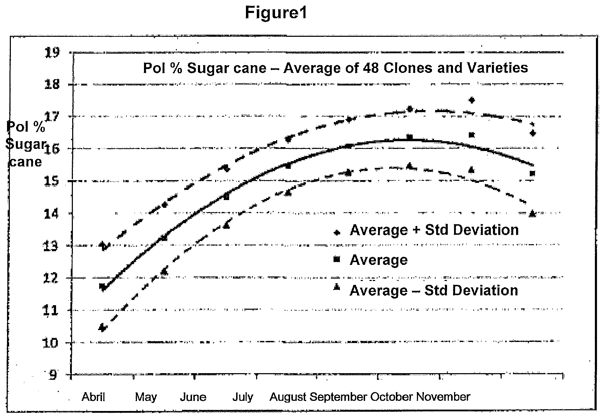

For example, in the Southeastern region in Brazil, the maturation begins in mid-April when the average temperature goes down, thus hindering the vegetative development without, however, affecting the photosynthesis process occurring in the active leaves. Thus, with near-zero growth rates, plant starts to storage sugars produced and its maximum maturity is reached in September/October (see Figure 1).

According to Figure 1, we observe that the average results of pol % sugar cane, under experimental conditions in improvement programs, prove that only from May the varieties available in the market start to reach the maturity point for cutting and industrialization. By observing the lower limit established by the average value of pol % sugar cane less the standard deviation (bottom curve), we can evidence that there are varieties only reaching the maturity point from June, that is, after 30 days from the harvest.

The use of vegetal regulators in areas and varieties harvested in this period is a technique that admittedly hastens the maturity of the sugar cane and increases the productivity.

Today, it is common to cultivate sugar cane throughout the year. In case of high average temperature and humidity in the soil, it is possible to find, even in the harvest, varieties presenting low industrial efficiency if cultivated in the last winter prior to its harvest, because they have no adequate time for maturity. In this scenario, it would be interesting and advantageous to hasten the maturity.

After few months, the sugar cane can have high sugar content due to lack of water, nutrients and other factors relevant to its development. This fact does not mean that it will be physiologically mature, that is, for the harvest stage. Following this reasoning, it is possible to conclude that adulthood itself does not mean full maturity.

Currently, sugar cane plants use chemicals such as ripeners to increase the sucrose content at the beginning of the harvest. Such chemicals are herbicide compounds, such as glyphosate or growth inhibitors, such asphytohormones. These products, however, are limited, such as the drift in crops near the canebrakes because an airplane sprays the herbicide.

Due to the action, it can kill or cause injury in neighboring crops, which is very common in Sao Paulo, the largest sugar cane producer (including orange, soybean, peanut, and vegetable and fruits in general), or even poisoning people living near canebrakes.

Another limitation is the period required for the next sugar cane harvest, because they are "chemical products", according to the product we have to wait 20 - 40 days for the harvest. This period is important to prevent the sugar cane from contamination.

This period, therefore, can be critical, if the sugar cane is fully developed and / or it must be harvested before this time.

The prior art searching detected some priorities related to herbicides, control, sucrose and sugar cane crops, which were not considered impeditive for the present invention. Among them, the following can be mentioned:

**[0019]** - PI0100470-0, filing date 02/08/2011, title "Regulação e manipulação do teor de sacarose em cana-de-açúcar". This request is related to the regulation and manipulation of sucrose content in a plant that stores sugar, such as sugar cane, by regulating the PFP enzyme activity in the plant. We observed that the sub-regulation of PFP enzyme by reducing the concentration of one of the subunits, that is, subunit SS of the enzyme increases the sucrose content in the plant. In a preferred modality of invention, the PFP enzyme activity is sub-regulated by adding a non translated element or an anti-sensoria element of an isolated nucleotide sequence for the invention.

**[0020]** - PI 9702457-0, filing date 06/06/97, title "Metodo para melhorar e/ou aumentar o teor de açúcar e/ou prevenir a redução do teor de açúcar de plantas, método para controle de pestes, método para controle de teredem gorgulho de cana-de-açúcar e uso de um composto". This invention is related to a method for improving and/or increasing the sugar content and/or preventing the reduction of sugar content in plants, especially sugar cane, which includes the treatment of plants with an effective amount of a compound 1-aripirazole.

**[0021]** - PI 1106811-6, filing date 10/27/2011, title "Composição herbicida sinérgica contendo penoxsulame e orizalin". This invention is related to herbicidal synergistic composition containing (a) penoxsulam and (b) oryzalin that provide improved post-emergence herbicidal weed control in tree and vine crops, turf, sugar cane, range and pasture, parks and alleyways, and industrial vegetation management.

**[0022]** - PI 9400602-4, filing date 02/17/1994, title "Processo para controle de crescimento indesejado de plantas, Composição herbicida e Processo para combate de ervas daninhas em cana-de-açúcar". The invention describes that the co-application of dimethenamid with other herbicides provides improved herbicide activity.

As we can observe, the prior art did not describe a Biocatalyst to be used in sugar cane crops yet.

This invention, in order to remedy some of the prior art limitations, developed a Biocatalyst to be used in the process concerning production, transportation and accumulation of sucrose in the sugar cane crop. The Biocatalyst mentioned do not causes harm or risk to any neighboring cultivation, as well the period of 20 - 40 days for the harvest can be avoided.

## DESCRIPTION OF FIGURES

Figure 1-0 Graph 1, according to the figure mentioned, shows the average maturity curve (Pol % Sugar cane) for 48 clones and varieties of sugar cane available in the market (Source: UfsCar-Federal University of São Carlos and CTC - Technology Center).

## SUMMARY OF THE INVENTION

After an extensive investigation, inventors developed a Biocatalyst to be used in sugar cane crops. The Biocatalyst mentioned do not causes harm or risk to any neighboring cultivation, as well the period of 20 - 40 days for the harvest can be avoided.

Thus, factor of this invention is to provide the Use of Biocatalyst in the process concerning production, transportation and accumulation of sucrose in the sugar cane. The Biocatalyst can be used throughout the year and includes the following stages:

identification of the ideal moment for adding nutrients to the system;

adding nutrients to the system; and

nutrients acting inside the plant.

## DETAILED DESCRIPTION OF THE INVENTION

In order to overcome problems found in the prior art, this invention aims at describing a Biocatalyst for sugar cane and its use in the process concerning production, transportation and accumulation of sucrose throughout the year.

The Biocatalyst mentioned do not causes harm or risk to any neighboring cultivation, as well the period of 20 - 40 days for the harvest can be avoided.

The Biocatalyst mentioned is based on the balance of nutrients (which ones and which amounts) required to change the ratio of enzymes responsible for accumulating sugar in the plant.

In the past, two nutrients (nitrogen and potassium) were used in an attempt to promote the accumulation of sugar at the end of the sugar cane crop. However, this operation was unsuccessful because the sugar cane grew without accumulating sugar.

Under the economic point of view, sugar cane is considered ready for industrialization when it shows 13% of sucrose in relation to the weight of culm and 85% of purity (Brieger, 1968; In: Felipe, D.C., 2008) and a mature sugar cane can reach indices greater than 90% of purity (see Table 1 below).

**Table 1: Components of the sugar cane juice**

| Components | Sugar cane - immature stage | Sugar cane - mature stage |
|---|---|---|
| Water | 88% | 79% |
| Soluble solids (Brix) | 12% | 21% |
| Soluble solids | Sugar cane - immature stage | Sugar cane - mature stage |
| Sucrose (Pol) | 8% | 19% |
| Glucose | 1.9% | 0.4% |
| Fructose | 1.0% | 0.3% |
| Non Sugars* | 1.1% | 1.3% |
| | | |
| Apparent Purity (Pol/Brix*100) | 66.7% | 90.5% |
| *Fats, waxes, dyes, starch, macro and micronutrients, etc. | | |

Results from technological analyses in sugar cane samples made at the beginning of the harvest, in Jaboticabal, São Paulo (see Table 2), show that, from end of April, sugar canes ageing about 14 months already initiated their natural maturity process (Purity = 80.1 %) and thirty days later they were found mature, that is, suitable for the harvest.

**Table 2: Results from technological analyses in sugar cane samples made at the beginning of the harvest, in Jaboticabal, SP, (12 clones/varieties on average).**

| Results | March 14 | April 04 | April 27 | May 18 | June 06 |
|---|---|---|---|---|---|
| Brix%Juice | 14.9 | 16.5 | 17.6 | 18.8 | 19.2 |
| Pol%Juice | 10.9 | 12.7 | 14.1 | 15.5 | 16.6 |
| Purity | 73.2 | 77.0 | 80.1 | 82.4 | 86.5 |

Once sugar canes whose Purity is 85% are considered mature, the application of vegetal regulators must be made before this stage, so that the induced maturation can takes place.

Vegetal regulators are substances that change plant physiology by interfering with the amino acids and enzymes synthesis or by stimulating hormone production, thus limiting the cell division or growth in the meristematic growth.

However, there are evidences regarding the use of macro and micronutrients because they directly act in the maturation process stages that can hasten the sugar cane maturity. Furthermore, it is advantageous to use nutrients because they do not pose a risk to crops in areas close to canebrakes.

From the evidences resulted the development of the Biocatalyst mentioned, to be used in the process concerning production, transportation and accumulation of sucrose in the sugar cane crop throughout the year. The Biocatalyst is employed in the three stages described below:

Stage 1 - Identification of the ideal moment for adding nutrients to the system

The proper way to define the ideal moment for adding nutrients to the system in order to increase the sugar at the end of the cycle is to analyze the Purity of the sugar cane. This information is an indicative of canebrakes where this technique can provide better gains.

In percentage, Purity is the amount of sucrose in the sugar cane juice (Pol % Juice or Sucrose from Juice Extraction - SCE) contained in soluble solids of the juice (Juice Brix). It is calculated by the equation:

$$Purity = Pol/Brix \times 100$$

The ideal levels of Purity for better gains of sugar are between 75% and 85%.At this moment, nutrients must be added in the system.

Stage 2 - Adding nutrients to the system

The specific function of each nutrient for this stage of the sugar cane crop was studied, as well as the necessary amount for each one so that the desired reaction can specifically occur. Thus, each nutrient is relevant, in accordance with the characteristics described below:

- nitrogen (N) found in chlorophyll; pigment in chloroplasts of the plants, essential for capturing the solar energy that is transformed into chemical energy, its synthesis is compromised in conditions of nitrogen (N) deficiency, symptoms known as chlorosis occur. Its excess, however, stimulates the growth, undesirable factor at this stage;

- potassium (K) is responsible for activating enzymes and maintaining the cell turgescence and dispersion of protoplasm. It regulates the opening of stomata and, therefore, the entry of C02, the carbon source for the sugar synthesis. It acts in the metabolism of hexoses and affects directly the transport of sucrose from leaves to culm;

- phosphor (P) acts directly in transforming fructose into sucrose. Moreover, it is responsible for transforming luminous energy into chemical energy (ATP) in the photosynthesis;

- boron (B) is responsible for developing roots and acts directly in the transport of sugars. It is directly related to the metabolism of calcium, that is, this nutrient is required for the adequate formation of the cell wall. The boron's physiological function differs from the other micronutrients', because this anion was not identified in any specific compound or enzyme. The metabolism of carbohydrates and transport of sugars through the membranes are among the main functions related to this micronutrient; nucleic acid (DNA and RNA) and phytohormones synthesis; formation of cell walls and cell division (Dechen et al, 1991);

- copper (Cu) takes part in iron-porphyrin biosynthesis, forerunner of chlorophyll; therefore, its absence impairs the photosynthetic process;

- manganese (Mn) is the electron donor in the Photosystem II, in the chlorophy synthesis and in the formation and functioning of the chloroplasts. It acts in the photosynthesis, being involved in the structure, functioning and multiplication of chloroplasts, also carrying out the electronic transport. It is required for the activity of some dehydrogenases, decarboxylases, kinases, oxidases and peroxidases. It is involved with other enzymes activated by cations and with the photosynthetic evolution of oxygen (Taiz & Zeiger, 2004). Large amount of manganese in the growth zones of the plant, mainly in the heart of palm, is observed. It is found mainly on the meristematic tissues;

- molybdenum (Mo) acts in the nitrogen fixation systems and its deficiency results in lower levels of sugars and ascorbic acid. It is essential for the metabolism of nitrogen in plants that use, as source of this nutrient, the nitrate from the soil and/or atmospheric nitrogen from the biological fixation process bydiazotrophic bacteria associated to the plant. Sugar cane can receive N from these two sources, and, therefore, it is formulated the hypothesis that the Mo is a production factor for this crop, for its adequate supply is required to meet the great demand of N by the plants, mainly for the improvement of the contribution of the biological nitrogen fixation (FBN) in the nitrogen-based nutrition. In the biological systems, molybdenum consists of at least five catalytic reaction enzymes. Three out of these enzymes (nitrate reductase, nitrogenase and sulfite oxidase) are found in plants (Gupta & Lipsett, 1981 apud Dechen et al, 1991);

- zinc interferes with the level of tryptophan, forerunner of auxin amino acid (AIA), hormone essential for the elongation and increase in cell volume; therefore, elongation of the internodes (space for storage);

- sulfur (S) plays important role in the metabolism and, therefore, the vital cycle of the plants. Molecules containing S take part in the essential amino acid structure, chlorophyll, enzymes and coenzymes, as well as taking part in diverse metabolic processes as enzymatic activation;

- Magnesium (Mg) plays several key roles in the sugar cane. The metabolic processes and the reactions particularly affected by the Mg are: photophosphorylation (such as the formation of ATP in the chloroplasts), photosynthetic carbon dioxide fixation, protein synthesis, formation of chlorophyll, phloem loading, separation and use of assimilated photo, generation of reactive oxygen species. Therefore, many physiological and biochemical processes are affected by magnesium.

Due to the aforementioned, a balance of nutrients was developed for 1 hectare of sugar cane. Please see Table 3 below:

Table3-Balanceofnutrients

| Nutrient | Amount |
|---|---|
| Nitrogen(N) | 90g |
| Potassium($K_2O$) | 400g |
| Magnesium(MgO) | 40g |
| Sulfur(S) | 150g |
| Boron(B) | 12g |
| Copper (Cu) | 4g |
| Manganese(Mn) | 12g |
| Molybdenum(Mo) | 0.3g |
| Zinc(Zn) | 24g |

Stage 3: Nutrients acting inside the plant

The availability of these nutrients in the plant acts directly in (i) photosynthesis, (ii) transport and (iii) storage of sugars, thus enhancing and catalyzing each phase and increasing the efficiency of the process. In accordance with the stage 2, each nutrient acts as follows:

(i) Photosynthesis:

Due to large amount of glucose being produced in the photosynthesis, this is transformed into sucrose in the cytosol of the mesophyll cells from where it is carried to the vacuoles of the cells in the culm.

(ii) Transport:

Should the transport of sucrose be also potentiated by the presence of the nutrients involved, no concentration of sucrose in the apoplast will occur (external compartments in relation to the plasmatic membrane). This occurs because there are evidences that the deficiency in nitrogen, phosphor, potassium and boron reduces considerably the speed for transporting sucrose.

(iii) Accumulation of Sucrose:

As an advantage in this invention, the largest accumulation of sucrose in apoplast inhibits the action of the acid invertase (SAI), which is responsible for transforming sucrose into hexoses (glucose and fructose) that makes available carbon and energy for the metabolic activities of the plant as part of the breathing process and differentiated compound synthesis used in the growth. Therefore, there is stimulation in the neutral invertase synthesis (NI), which is the enzyme responsible for transporting sucrose for storage, thus resulting in larger accumulation of sugar and hastening the maturity.

For instance, the enzymatic balance in this present invention, which can be changed by the concentration of sucrose (hexoses) in the cells of culm, is represented as follows:

(Little Hexose)

↑ SAI (high) ------------>↓NI (low)= Vigorous Growth

(Much Hexose)

↓ SAI (low) ------------>↑NI (high)= Accumulation of Sugar

Another advantage to be mentioned in this invention is that the artificial maturity by employing chemicals makes possible the handling of varieties by increasing in sugar contents, middle and apical internodes, thus promoting the industrial quality of the raw and contributing for better economic outcomes.

The artificial maturity is an important tool for planning the harvest. In practice, it favors the hastening of cutting in a canebrake with vertical increase in production, that is, a bigger productivity in the same unit of area.

Cutting, loading, transport and industrialization are also benefited, due to more sugar and ethanol per ton of sugar cane.

Specialists in the technique will understand that small variations in this invention are within the scope of the invention.

**Claims**

1.  Biocatalyst, that consists of the following nutrients: Nitrogen (N), Potassium ($K_2O$), Magnesium (MgO); Sulfur (S), Boron (B), Copper (Cu), Manganese (Mn), Molybdenum (Mo) and Zinc (Zn).

2.  Biocatalyst, in accordance with claim 1, is **characterized by** the fact that consists of the following nutrients and their preferably amounts: Nitrogen (N) = 90g, Potassium ($K_2O$) = 400g, Magnesium (MgO) = 40g; Sulfur (S) = 150g, Boron (B) = 12g, Copper (Cu) = 4g, Manganese (Mn) = 12g, Molybdenum (Mo) = 0.3g and Zinc (Zn) = 24g.

3.  Biocatalyst, of claim 1 or 2, wherein it is employed in sugar cane crops.

4.  Use of Biocatalyst, of claims 1-2, wherein it is employed in the process concerning production, transportation and accumulation of sucrose in the sugar cane crops, according to the three stages below:

    - Stage 1 - Identification of the ideal moment for adding nutrients to the system;
    - Stage 2 - Adding nutrients to the system; and
    - Stage 3 - Nutrients acting inside the plant.

5.  Use of Biocatalyst, of claim 4, wherein stage 1 can occur by analyzing the degree of purity in sugar cane, measured in Purity = Pol/Brix X 100.

6.  Use of Biocatalyst, of claim 5, wherein the ideal purity is between 75% and 85%.

7.  Use of Biocatalyst, of claim 4, wherein the stage 2 nutrients are preferentially: Nitrogen (N), Potassium ($K_2O$), Magnesium (MgO), Sulfur (S), Boron (B), Copper (Cu), Manganese (Mn), Molybdenum (Mo) and Zinc (Zn).

8.  Use of Biocatalyst, of claim 7, wherein the preferably nutrients are preferentially in the following amounts: Nitrogen (N) = 90g, Potassium (K2O) = 400g, Magnesium (MgO) = 40g; Sulfur (S) = 150g, Boron (B) = 12g, Copper (Cu) = 4g, Manganese (Mn) = 12g, Molybdenum (Mo) = 0.3g and Zinc (Zn) = 24g.

9.  Use of the Biocatalyst, of claim 4, wherein the stage 3 acts directly in (i) photosynthesis, (ii) transport e (iii) storage of sugars, thus enhancing and catalyzing each phase and increasing the efficiency of the process.

10. Use of Biocatalyst, of claim 9, wherein the largest accumulation of sucrose in apoplast (stage iii) inhibits the action of acid invertase (SAI) and, therefore, stimulates the neutral invertase synthesis (NI) as follows:

(Little Hexose)

↑ SAI (high) ----------->↓NI (low)= Vigorous Growth

(Much Hexose)

↓ SAI (low) ----------->↑NI (high)= Accumulation of Sugar

11. Use of Biocatalyst, of claims 4-10, wherein it allows to an artificial maturity in the sugar cane, thus making possible the handling of varieties by increasing in sugar contents.

## Figure1

## INTERNATIONAL SEARCH REPORT

| International application No. |
| --- |
| **PCT/BR2015/000027** |

**A.  CLASSIFICATION OF SUBJECT MATTER**

**C05G1/00 (2006.01)**

According to International Patent Classification (IPC) or to both national classification and IPC

**B.  FIELDS SEARCHED**

Minimum documentation searched (classification system followed by classification symbols)

**C05G1/00 (2006.01)**

Documentation searched other than minimum documentation to the extent that such documents are included in the fields searched

**Portal CAPES, Banco de patentes INPI-BR**

Electronic data base consulted during the international search (name of data base and, where practicable, search terms used)

**EPODOC, USPTO**

**C.  DOCUMENTS CONSIDERED TO BE RELEVANT**

| Category* | Citation of document, with indication, where appropriate, of the relevant passages | Relevant to claim No. |
| --- | --- | --- |
| X | BECARI, Gustavo Ricardo Gonçalves. "Resposta da cana-planta à aplicação de micronutrientes". Dissertação (Mestrado). Instituto Agroeconômico de Campinas, Campinas, São Paulo, Brasil, April de 2010.<br>The whole document · | 1-11 |
| X | US 3558300 A (ALLIED CHEM)<br>26  January  1971 (1971-01-26)<br>The whole document · | 1-11 |
| X | US 6874277 B2<br>05 April 2005 (2005-04-05)<br>The whole document · | 1-11 |

☒ Further documents are listed in the continuation of Box C.      ☒ See patent family annex.

| | |
| --- | --- |
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **07/04/2015** | **08/05/2015** |

| Name and mailing address of the ISA/ | Authorized officer |
| --- | --- |
| | |
| Facsimile No. | Telephone No. |

Form PCT/ISA/210 (second sheet) (January 2015)

**INTERNATIONAL SEARCH REPORT**

International application No.

**PCT/BR2015/000027**

C (Continuation). DOCUMENTS CONSIDERED TO BE RELEVANT

| Category* | Citation of document, with indication, where appropriate, of the relevant passages | Relevant to claim No. |
|---|---|---|
| X | CN 102491821 A (GUANGXI YONGHUO JINLILAI FERTILIZER INDUSTRY CO LTD) 13 June 2012 (2012-06-13) The whole document · | 1-11 |
| A | BR PI0809062 A2 (EUROFORTE AGROCIENCIAS LTDA [BR]) 19 October 2010 (2010-10-19) The whole document · | 1-11 |
| A | BR PI0703566 A2 (PEDROSO JOSE ADILSON JR [BR]) 29 September 2009 (2009-09-29) The whole document · | 1-11 |

Form PCT/ISA/210 (continuation of second sheet) (January 2015)

International application No.

**PCT/BR2015/000027**

| Documentos de patente citados no relatório de pesquisa | Data de publicação | Membro(s) da família de patentes | Data de publicação |
|---|---|---|---|
| US 3558300 A | 1971-01-26 | Nenhum | |
| US 6874277 B2 | 2005-04-05 | US 2002121046 A1 | 2002-09-05 |
| | | AU 3373395 A | 1996-03-22 |
| | | AU 4333989 A | 1990-04-02 |
| | | AU 7332691 A | 1991-10-10 |
| | | AU 8424991 A | 1992-03-17 |
| | | BR 8907648 A | 1991-07-30 |
| | | CA 1337244 C | 1995-10-10 |
| | | DE 68924781 D1 | 1995-12-14 |
| | | EP 0433394 A1 | 1991-06-26 |
| | | EP 0544759 A1 | 1993-06-09 |
| | | ES 2018915 A6 | 1991-05-16 |
| | | ES 2106786 T3 | 1997-11-16 |
| | | GR 2000657 Y | 1991-06-28 |
| | | GR 3024323 T3 | 1997-10-31 |
| | | GR 89100566 A | 1990-10-31 |
| | | IL 91513 D0 | 1990-04-29 |
| | | JP H04500658 A | 1992-02-06 |
| | | JP 3298633 B2 | 2002-07-02 |
| | | MX 174528 B | 1994-05-23 |
| | | PH 30895 A | 1997-12-23 |
| | | PT 91678 A | 1990-03-30 |
| | | PT 98749 A | 1992-07-31 |
| | | US 5549729 A | 1996-08-27 |
| | | US 5582627 A | 1996-12-10 |
| | | US 5696094 A | 1997-12-09 |
| | | US 5797976 A | 1998-08-25 |
| | | US 6309440 B1 | 2001-10-30 |
| | | US 6318023 B1 | 2001-11-20 |
| | | US 6336772 B1 | 2002-01-08 |
| | | WO 9002719 A1 | 1990-03-22 |
| | | WO 9113844 A1 | 1991-09-19 |
| | | WO 9203393 A1 | 1992-03-05 |
| | | WO 9606531 A1 | 1996-03-07 |
| CN 102491821 A | 2012-06-13 | None | |
| BR PI0809062 A2 | 2010-10-19 | None | |
| BR PI0703566 A2 | 2009-09-29 | None | |

Form PCT/ISA/210 (patent family annex) (January 2015)